# FASCICULE DE BREVET EUROPEEN

(11) **EP 0 370 862 B1**
(45) Date de publication et mention de la délivrance du brevet: **18.01.1995**
(21) Numéro de dépôt: 89403115.2
(22) Date de dépôt: 13.11.1989
(51) Int. Cl.: H04L 1/04, H04L 5/02

(54) **Procédé et système de transmission d'un signal**
Verfahren und System zur Signalübertragung
Method and system for signal transmission

(30) Priorité: 14.11.1988 FR 8814782
(43) Date de publication de la demande: 30.05.1990
(73) Titulaire: Morey, Gilles, F-38190 Brignoud (FR)
(72) Inventeur: Morey, Gilles, F-38190 Brignoud (FR)
(74) Mandataire: Casalonga, Axel

(56) Documents cités:
- DE-C- 879 703
- FR-A- 2 207 396
- GB-A- 687 205
- US-A- 1 504 303
- US-A- 2 397 884
- US-A- 4 188 503
- US-A- 4 349 915

## Description

La présente invention concerne le domaine de la transmission de signaux en vue de transmettre des informations ou des messages.

Le document US -A- 4 188 503 décrit et montre un système de transmission FSK à double tonalité d'un signal, dont le but est de fiabiliser non pas la transmission du signal mais le processus de décision concernant chaque état du signal, c'est-à-dire d'être sûr que l'information soit convenablement interprétée, c'est-à-dire qu'il n'y ait pas de confusion entre les "uns" et les "zéros" du signal. Pour celà, le signal à transmettre est divisé en deux parties mutuellement et temporellement associées (les "uns" et les "zéros"). Ces deux parties sont transmises respectivement sur deux fréquences dans le même canal et confrontées dans le dispositif de réception pour décider le plus justement possible de l'état du signal reçu.

On peut observer que le signal reçu n'existe que si les deux parties du signal d'origine sont transmises en synchronisme. Il est donc mis en oeuvre un auto-contrôle entre l'émission et la réception pour vérifier que l'information reçue est bien identique à l'information émise. Celà ressort nettement de la structure des moyens d'émission et de la structure des moyens de réception. Dans la mesure où le synchronisme ou la coïncidence ci-dessus ne sont pas réalisés tout au long de la chaîne de transmission, depuis l'entrée du signal dans les moyens d'émission jusqu'à sa sortie des moyens de réception, l'information transmise est rejetée et en conséquence perdue.

En d'autres termes, dans le document US -A- 4 188 503, le signal à transmettre est divisé en deux parties, ces deux parties sont transmises par deux voies dépendantes puis réassociées pour constituer le signal reçu. Si cette réassociation par coîncidence n'est pas possible, le signal est définitivement perdu et en conséquence inexploitable.

Les documents DE -C- 879 703 et US -A- 2 397 884 décrivent et montrent également un système de transmission FSK qui présente les mêmes inconvénients que ceux indiqués ci-dessus à propos du système du document US -A- 4 188 503. En cas de troubles sur la fréquence de transmission, le signal n'est pas transmis et donc n'est pas exploitable.

Un but de la présente invention est de fournir un procédé et un système qui permettent d'augmenter considérablement les chances pour que la transmission de signaux ou d'informations recherchée soit atteinte, même en cas de perturbations extérieures.

Un autre but de la présente invention est de pouvoir détecter l'impossibilité de recevoir les signaux ou les informations que l'on veut transmettre.

Un autre but de la présente invention est de pouvoir faire coexister plusieurs réseaux de transmission de signaux ou d'informations affectées à des fonctions différentes, comprenant chacun plusieurs émetteurs indépendants et plusieurs récepteurs indépendants, les émetteurs d'un réseau ne perturbant pas les récepteurs d'un autre réseau, les réseaux ayant néanmoins la possibilité d'échanger entre eux des signaux ou des informations.

Un autre but de la présente invention est de pouvoir combiner les objectifs ci-dessus.

Un autre but de la présente invention est de pouvoir réaliser ces objectifs à des coûts très bas, notamment grâce à des moyens de transmission radioélectriques simples.

Tel qu'il est revendiqué, le procédé de transmission d'une information, tel qu'un signal à au moins deux états, fournie à l'entrée de moyens d'émission et exploitable à la sortie de moyens de réception, consiste selon un objet de l'invention à transformer le signal (B1) contenant l'information précitée au moins en un premier signal intermédiaire et un second signal intermédiaire dont les états de chacun caractérisent l'information à transmettre, à créer des canaux de transmission indépendants caractérisés par des fréquences porteuses différentes (fo, f1) pour chacun de ces canaux, à émettre séparément et indépendamment l'un par rapport à l'autre lesdits premier et second signaux intermédiaires respectivement sur lesdits canaux de transmission (fo, f1) en modulant leur fréquence porteuse, à recevoir séparément et indépendamment l'une par rapport à l'autre la fréquence porteuse desdits canaux de transmission et à détecter sa modulation afin d'obtenir le signal intermédiaire transmis par ce canal.

Ainsi le procédé de l'invention permet de pouvoir fournir ou reconstituer le signal précité (B1) contenant l'information à partir de la réception d'un seul desdits premier et second signaux intermédiaires via le canal de transmission correspondant, indépendamment de l'absence ou de la modulation de la fréquence porteuse de l'autre canal ou si cet autre canal contient du bruit ou des interférences.

Le procédé de transmission selon l'invention peut en outre consister à transformer le signal (Bo) contenant une autre information en un autre signal intermédiaire dont l'état caractérise l'information à transmettre, à émettre cet autre signal intermédiaire sur l'un desdits canaux de transmission (fo) en modulant sa fréquence porteuse.

Ainsi le procédé de l'invention permet de pouvoir fournir ou reconstituer le signal précité (Bo) contenant l'information à partir de la réception dudit autre signal intermédiaire via le canal de transmission précité correspondant (fo), indépendamment de l'absence ou de la modulation de la fréquence porteuse de l'autre canal (f1) ou si cette autre canal contient du bruit ou des interférences.

Tel qu'il est revendiqué, le procédé de transmission de deux informations, tel que des signaux à au moins deux états, fournies à l'entrée de moyens d'émission et exploitable à la sortie de moyens de réception, consiste selon un objet de l'invention à transformer les deux signaux (B1, B2) contenant les informations précitées en respectivement un premier signal intermédiaire et un second signal intermédiaire dont respectivement les états de chacun caractérisent l'information à transmettre, à créer des canaux de transmission indépendants caractérisés par des fréquences porteuses différentes (f0, f1, f2) pour chacun de ces canaux, à émettre l'un des signaux intermédiaires correspondant au signal contenant l'une des informations et l'un des signaux intermédiaires correspondant au signal contenant l'autre information sur un canal de transmission commun (f1) et à émettre leur autre signal intermédiaire correspondant sur deux autres canaux de transmission différents (fo, f2), en modulant leur fréquence porteuse, à recevoir séparément et indépendamment les unes par rapport aux autres la fréquence porteuse desdits canaux de transmission (fo, f1, f2) et à détecter sa modulation afin d'obtenir le signal intermédiaire transmis par ce canal.

Ainsi le procédé de l'invention permet de pouvoir fournir ou reconstituer respectivement les signaux précités (B1, B2) contenant les informations à transmettre à partir de la réception d'un seul de leurs premier et second signaux intermédiaires correspondant via le canal de transmission correspondant, indépendamment de l'absence ou de la modulation de la fréquence porteuse de l'autre canal ou si cet autre canal contient du bruit ou des interférences.

Le procédé selon l'invention, dans lequel le signal précité contenant l'information à transmettre est un signal binaire, peut avantageusement consister à transformer ce signal binaire contenant l'information à transmettre en un premier signal intermédiaire correspondant à l'un des états de ce signal binaire et en un second signal intermédiaire correspondant à l'autre état de ce signal binaire, inverse du premier état.

Le procédé selon l'invention peut en outre avantageusement consister à produire un signal de commande lorsque les canaux de transmission précités, par lesquels sont transmis les signaux intermédiaires correspondant à l'information à transmettre, sont, pendant une durée déterminée, simultanément activés ou excités par un ou des signaux les perturbant, différents du signal intermédiaire correspondant à transmettre.

Le procédé selon l'invention peut en outre avantageusement consister à émettre plusieurs fois les signaux intermédiaires sur chacun de leurs canaux de transmissionn respectifs, ou à répéter plusieurs fois le signal contenant l'information à transmettre.

Tel qu'il est revendiqué, le système de transmission d'un signal à au moins deux états dont chaque état caractérise l'information à transmettre, tel qu'un signal binaire, selon un autre objet de l'invention, comprend un dispositif d'émission de signaux (B1) comprenant deux oscillateurs commutés en amplitude alternativement par les deux états du signal binaire (B1) et capables d'émettre l'un sur une première fréquence porteuse (fo) correspondant à un premier canal de transmission et l'autre sur une seconde fréquence porteuse (f1) correspondant à un second canal de transmission ou un oscillateur commuté en fréquence porteuse par le signal binaire et capable d'émettre sur une première fréquence porteuse (f1), correspondant à un premier canal de transmission, uniquement lorsque le signal binaire est dans l'un de ses états et sur une deuxième fréquence porteuse (f2), correspondant à un second canal de transmission, uniquement lorsque le signal binaire est dans son autre état ; ainsi qu'un dispositif de réception à deux canaux de réception indépendants comprenant deux détecteurs de signaux sensibles respectivement et indépendamment auxdites première et deuxième fréquences porteuses (fo, f1), ou un détecteur unique à balayage ou à scrutation de fréquence susceptible de détecter indépendamment et isolément lesdites première et deuxième fréquences porteuses (f1, f2), de manière à fournir à sa sortie le signal binaire ou son inverse reçus via la première ou la seconde desdites fréquences porteuses (f1, f2) ; de manière à pouvoir fournir le signal binaire à partir de la réception d'un seul de ses états via l'un dedits canaux de transmission, indépendamment de l'absence, la modulation de la fréquence porteuse de l'autre canal de transmission ou si ces derniers contiennent du bruit ou des interférences.

Selon la présente invention, le système peut comprendre en outre un second dispositif d'émission de signaux comprenant un oscillateur commuté en amplitude par l'un des états d'un autre signal binaire (Bₒ) et capable d'émettre sur uniquement l'une des fréquences précitées (fₒ), de telle sorte que le dispositif de réception fournisse à sa sortie cet autre signal binaire (Bₒ).

Selon la présente invention, le système peut également comprendre un second dispositif de réception de signaux comprenant un détecteur sensible uniquement à l'une des fréquences précitées (fₒ), de manière à fournir à sa sortie le signal binaire (B₁).

Selon la présente invention, le système peut avantageusement comprendre un second dispositif d'émission de signaux (B₂) comprenant soit un oscillateur commuté en fréquence par un second signal binaire (B₂) et capable d'émettre sur ladite seconde fréquence (f₁) uniquement lorsque ce second signal binaire (B₂) est dans l'un de ses états et sur une troisième fréquence (f₂) uniquement lorsque ce second signal binaire (B₂) est dans son autre état, soit deux oscillateurs commutés en amplitude alternativement par les deux états de ce second signal binaire et capables d'émettre l'un sur ladite seconde fréquence (f₁) et l'autre sur une troisième fréquence (f₂); ainsi qu'un second dispositif de réception comprenant soit un détecteur unique à balayage ou à scrutation de fréquences susceptible de détecter indépendamment lesdites seconde et troisième fréquences (f₁, f₂) soit deux détecteurs de signaux sensibles respectivement et indépendamment auxdites seconde et troisième fréquences (fₒ, f₁); de manière à fournir sur les sorties des dispositifs de réception lesdits signaux binaires (B₁, B₂) ou leur inverse.

Selon la présente invention le dispositif de réception comprend de préférence des moyens pour fournir un signal de commande lorsque les deux fréquences auxquelles il est sensible sont, pendant une durée déterminée, simultanément excitées ou activées par un ou des signaux les perturbant.

Tel qu'il est revendiqué, le système de transmission d'au moins deux signaux binaires contenant des informations à transmettre (B1, B2), fournies à l'entrée de moyens d'émission et exploitables à la sortie de moyens de réception, selon un autre objet de l'invention, comprend des moyens pour transformer les signaux binaires précités en respectivement un premier signal intermédiaire et un second signal intermédiaire dont les états de chacun caractérisent l'information à transmettre correspondante ; des dispositifs d'émission de signaux comprenant des moyens pour émettre l'un des signaux intermédiaires correspondant au signal contenant l'une des informations et l'un des signaux intermédiaires correspondant au signal contenant l'autre information sur un canal de transmission commun (f1) et pour émettre leur autre signal intermédiaire correspondant sur deux autres canaux de transmission différents (f0, f2), en modulant leur fréquence porteuse ainsi que des dispositifs de réception comprenant des détecteurs adaptés pour recevoir séparément et indépendamment les unes par rapport aux autres respectivement les fréquences porteuses desdits canaux de transmission (f0, f1, f2) ou un détecteur unique à balayage ou à scrutation de fréquence susceptible de détecter indépendamment et isolément lesdites fréquences porteuses (f0, f1, f2), fournissant à leur sortie respectivement les signaux intermédiaires précités, et des moyens pour détecter sa modulation afin d'obtenir le signal intermédiaire transmis par ce canal.

La présente invention a en outre pour objet un système de transmission de plusieurs signaux binaires entre plusieurs dispositifs d'émission et plusieurs dispositifs de réception. Au moins un premier dispositif d'émission comprend un oscillateur commuté en amplitude par l'un des états d'un premier signal binaire (Bₒ) et capable d'émettre sur une première fréquence (fₒ) et au moins un second dispositif d'émission comprend soit un oscillateur commuté en fréquence par un second signal binaire et capable d'émettre sur ladite première fréquence (fₒ) uniquement lorsque ce second signal binaire est dans l'un de ses états et sur une deuxième fréquence (f₁) uniquement lorsque ce second signal binaire est dans son autre état, soit deux oscillateurs commutés en amplitude alternativement par les deux états du second signal binaire et capables d'émettre l'un sur ladite première fréquence (fₒ) et l'autre sur une seconde fréquence (f₁). Au moins un premier dispositif de réception comprend un détecteur sensible uniquement à la première fréquence précitée (fₒ) de manière à fournir à sa sortie le premier signal binaire (Bₒ) ou le second signal binaire (B₁), et au moins un second dispositif de réception comprend soit deux détecteurs de signaux sensibles respectivement et indépendamment aux première et seconde fréquences précitées (fₒ, f₁) soit un détecteur unique à balayage de fréquence susceptible de détecter indépendamment lesdites première et seconde fréquences (f₁, f₂), de manière à fournir sur sa sortie les signaux binaires précités (Bₒ, B₁) ou leur inverse.

Dans le système de transmission, le second dispositif de réception comprend des moyens capables de fournir un signal de commande lorsque les deux fréquences (fₒ, f₁) sont, pendant une durée déterminée, simultanément excitées ou activées par un ou des signaux les perturbant.

Dans une variante de l'invention, les dispositifs d'émission et les dispositifs de réception sont de préférence reliés par voie radioélectrique.

Tel qu'il est revendiqué, le système de transmission d'une information, tel qu'un signal à au moins deux états, fournie à l'entrée de moyens d'émission et exploitable à la sortie de moyens de réception, selon un autre objet de l'invention, comprend des moyens pour transformer le signal contenant l'information à transmettre (B1) en un premier signal intermédiaire et un second signal intermédiaire dont les états de chacun caractérisent l'information à transmettre ; un dispositif d'émission de signaux (B1) sur au moins deux canaux de transmission indépendants (fo, f1) comprenant deux oscillateurs capables d'émettre l'un sur une première fréquence porteuse d'un premier canal de transmission (fo) et l'autre sur une deuxième fréquence porteuse d'un deuxième canal de transmission (f1) ou un oscillateur capable d'émettre sur une première fréquence porteuse et sur une deuxième fréquence porteuse, en vue d'émettre lesdits signaux intermédiaires repectivement sur lesdits canaux de transmission caractérisés par les fréquences porteuses différentes précitées ainsi que un dispositif de réception à au moins deux canaux de réception indépendants (fo, f1), comprenant deux détecteurs de signaux indépendants sensibles respectivement auxdites première et deuxième fréquences porteuses (fo, f1) ou un détecteur unique à balayage ou à scrutation de fréquence susceptible de détecter indépendamment et isolément lesdites première et deuxième fréquences porteuses (f1, f2), fournissant à leur sortie respectivement les signaux intermédiaires précités ; de manière à pouvoir fournir ou reconstituer le signal précité (B1) contenant l'information à transmettre à partir de la réception d'un seul desdits premier et second signaux intermédiaires via le canal de transmission correspondant, indépendamment de l'absence ou de la modulation de la fréquence porteuse de l'autre canal ou si cette autre canal contient du bruit ou des interférences.

Selon l'invention, le système de transmission ci-dessus, dans lequel le signal précité contenant l'information à transmettre est un signal binaire, peut avantageusement comprendre des moyens pour transformer ce signal binaire contenant l'information à transmettre en un premier signal intermédiaire identique à ce signal binaire et en un deuxième signal intermédiaire correspondant à l'inverse de ce signal binaire.

Selon l'invention, le dispositif de réception ci-dessus comprend de préférence des moyens pour fournir un signal de commande lorsque les fréquences distinctes auxquelles il est sensible sont, pendant une durée déterminée, simultanément excitées ou activées par des signaux les perturbant.

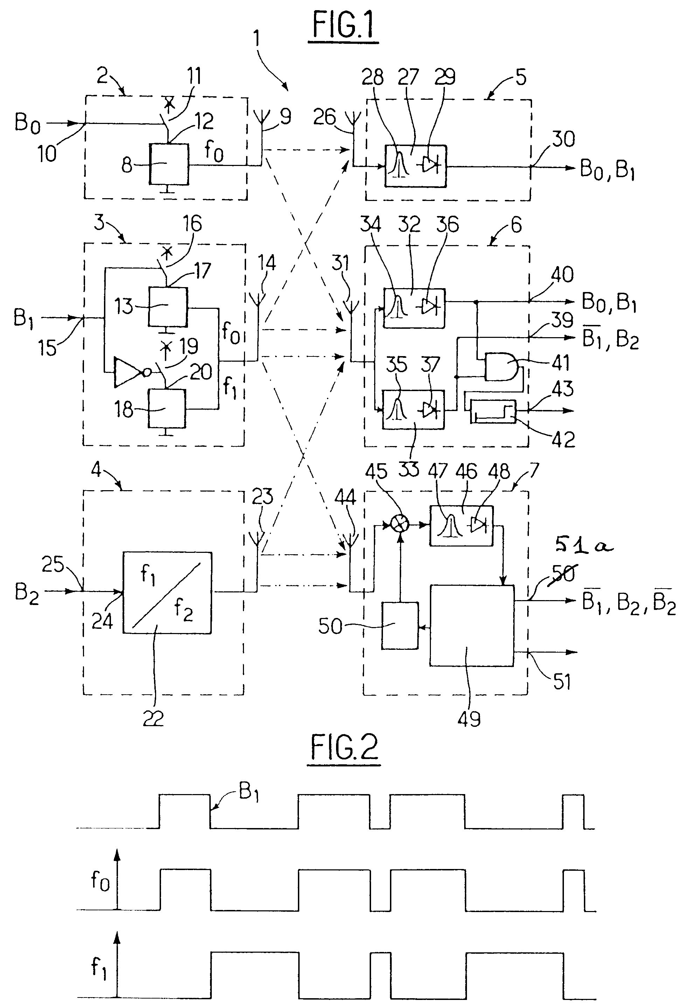

La présente invention sera mieux comprise à l'étude d'un système de transmission de signaux, formé de plusieurs réseaux, décrit à titre d'exemple non limitatif et illustré schématiquement sur la figure 1 annexée, la figure 2 annexée représentant un mode de transmission d'un signal.

Le système de transmission de signaux représenté sur la figure 1 et repéré d'une manière générale par la référence 1 comprend trois dispositifs indépendants d'émission de signaux repérés respectivement et d'une manière générale par les références 2, 3 et 4, ainsi que trois dispositifs indépendants de réception de signaux repérés respectivement et d'une manière générale par les références 5, 6 et 7. Ces dispositifs d'émission et ces dispositifs de réception sont, dans l'exemple, reliés par voie radioélectrique.

Les dispositifs d'émission sont dans l'exemple destinés à transmettre respectivement des signaux binaires Bₒ, B₁, B₂. Chacun de ces signaux binaires est composé d'un état UN et d'un état ZERO, ce signal binaire ou une succéssion de signaux binaires représentant des informations ou des messages à transmettre.

Le dispositif d'émission 2 comprend un circuit oscillateur 8 relié à une antenne émettrice 9. Il comprend une entrée 10 pour le signal binaire Bₒ, qui est réliée a un commutateur 11 qui est lui-même relié à une entrée de commande 12 du circuit oscillateur 8.

Le dispositif d'émission 2 fonctionne de la manière suivante. Lorsque le signal binaire Bₒ est à son état UN, le commutateur 11 commute en amplitude le circuit oscillateur 8.

Le dispositif d'émission 2 fonctionne de la manière suivante. Lorsque le signal binaire Bₒ est à son état UN, le commutateur 11 commute en amplitude le circuit oscillateur 8. Ce circuit 8 est réglé de manière à osciller sur une fréquence fₒ et l'antenne 9 rayonne cette fréquence fₒ. Lorsque le signal binaire Bₒ est à son état ZERO, le circuit oscillateur 8 est bloqué et l'antenne 9 ne rayonne pas. Ainsi, l'antenne 9 rayonne le signal binaire Bₒ sur la fréquence fₒ.

Le dispositif d'émission 3 comprend, comme le dispositif d'émission 2, un circuit oscillateur 13 relié à une antenne émettrice 14, une entrée 15 pour le signal binaire B₁ relié à un commutateur 16 qui est lui-même relié à une entrée de commande 17 du circuit oscillateur 13. Comme dans le cas du dispositif d'émission 2, le circuit oscillateur 13 est commuté en amplitude par le signal binaire B₁ et émet sur la même fréquence fₒ que le circuit oscillateur 8 du dispositif 2. Ainsi, l'antenne 14 rayonne sur la fréquence fₒ lorsque le signal binaire B₁ est à son état UN.

Le dispositif d'émission 2 comprend en outre un second circuit oscillateur 18 dont la sortie est également reliée à l'antenne 14, un commutateur 19 qui est relié à l'entrée de commutation 20 du circuit oscillateur 18 ainsi qu'un inverseur 21 qui relie l'entrée 15 au commutateur 19. Lorsque le signal binaire B₁ introduit par l'entrée 15 est à son état ZERO, cet état est inversé par l'inverseur 21 et le commutateur 19 commute en amplitude le circuit oscillateur 18 qui est réglé pour osciller sur une fréquence f₁ différente fₒ, de telle sorte que l'antenne 14 rayonne sur cette fréquence f₁.

Le dispositif d'émission 3 est donc construit de telle sorte que son antenne 14 émette sur la fréquence fₒ lorsque le signal binaire B₁ est à son état UN et émette sur la fréquence f₁ lorsque le signal binaire B₁ est à son état ZERO. Ce mode de fonctionnement apparaît sur la figure 2.

Ainsi, le dispositif d'émission 3 est adapté pour émettre simultanément le signal binaire B₁ et son inverse, sur deux canaux différents.

Le dispositif d'émission 4 se différencie du dispositif d'émission 3 par le fait qu'il ne comprend qu'un seul circuit oscillateur 22 qui cette fois est un circuit oscillateur à sauts de fréquence dont la sortie est reliée à une antenne 23 et dont l'entrée de commande 24 est reliée à une entrée 25 par laquelle est introduit le signal binaire B₂. Le circuit oscillateur 22 est réglé de manière à osciller à la même fréquence f₁ que le circuit oscillateur 18 du dispositif d'émission 3 lorsque le signal binaire B₂ est à son état UN. Par contre, lorsque le signal binaire B₂ est à son état ZERO, le circuit oscillateur 22 oscille à une fréquence f₂ différente de fₒ et f₁. Ces fréquences f₁ et f₂ sont rayonnées par l'antenne 23. Le dispositif d'émission 4 est donc également adapté pour émettre simultanément le signal binaire B₂ et son inverse, sur deux canaux différents.

Le dispositif de réception 5 comprend une antenne 26 qui est reliée à l'entrée d'un circuit de réception 27 qui comprend un filtre 28 et un détecteur 29, sa sortie étant reliée à une sortie de signal 30. Ce circuit de réception 27 est calé ou réglé pour être sensible aux signaux radioélectriques apparaissant sur la fréquence fₒ de telle sorte qu'il est sensible aux signaux émis par les dispositifs d'émission 2 et 3 sur cette fréquence. Ainsi, le dispositif de réception 5 est capable de recevoir et de fournir à sa sortie 30 le signal binaire Bₒ émis par le dispositif d'émission 2 et également le signal binaire B₁ émis par le dispositif d'émission 3.

Le dispositif de réception 6 comprend une antenne 31 qui est reliée à deux circuits indépendants de réception 32 et 33 qui comprennent respectivement des filtres 34 et 35 et des détecteurs 36 et 37. Le circuit de détection 32 est calé pour être sensible aux signaux radioélectriques apparaissant sur la fréquence fₒ tandis que le circuit de détection 33 est calé pour être sensible aux signaux radioélectriques apparaissant sur la fréquence f₁. La sortie du circuit de détection 32 est reliée à une sortie de signal 40 tandis que la sortie du circuit de détection 33 est reliée à une seconde sortie 39.

Comme le dispositif de réception 5, le dispositif de réception 6 est capable de recevoir, grâce à son circuit de détection 32 calé sur la fréquence fₒ, le signal Bₒ émis par le dispositif d'émission 2 et le signal B₁ émis par le dispositif d'émission 3 et fournir à sa sortie 40 ces signaux binaires Bₒ et B₁.

De plus, le dispositif de réception 6 est capable de recevoir, grâce à son circuit de réception 33 calé sur la fréquence f₁, l'inverse du signal binaire B₁ émis par le dispositif d'émission 3 et de fournir cet inverse à la sortie 39

Il y a lieu d'observer que le signal B₁ et son inverse qui sont simultanément émis par le dispositif d'émission 3 sont simultanément reçus par le dispositif de réception 6 et le dispositif de réception 6 est capable de fournir le signal B₁ ou son inverse à partir de la réception d'un seul des états du signal B₁ via l'une des fréquences fₒ ou f₁.

Comme on l'a vu, le dispositif d'émission 4 émet également sur la fréquence f₁ pour transmettre le signal binaire B₂. Le dispositif de réception 6 y étant sensible, il est également capable de recevoir et de fournir à sa sortie 39 le signal B₂ émis par le dispositif d'émission 4.

Le dispositif de réception 6 comprend également une porte ET 41 dont les deux entrées sont respectivement reliées à la sortie des circuits de réception 32 et 33 et dont la sortie est reliée à l'entrée d'un circuit de temporisation 42 relié à une sortie de signal de commande 43.

Lorsque les deux circuits de détection 32 et 33 sont excités en même temps pendant la durée de la temporisation du circuit de temporisation 42, un signal de commande apparait à la sortie 43 du dispositif de réception 6. L'apparition de ce signal de commande signifie que les canaux de transmission associés aux fréquences fₒ et f₁ auxquelles sont respectivement sensibles les circuits de détections 32 et 33, sont excités simultanément et qu'en conséquence aucune détection de signal n'est valablement réalisable.

Le dispositif de réception 7 est d'un type différent de celui du dispositif de réception 6 mais présente les mêmes fonctions. C'est un dispositif de détection à balayage ou à scrutation de fréquences qui comprend une antenne 44 qui est reliée à l'entrée d'un mélangeur de fréquences 45 dont la sortie est reliée à un circuit de détection à fréquence intermédiaire 46 comprenant un filtre 47 et un détecteur 48. La sortie de ce circuit de détection 46 est reliée à l'entrée d'un circuit de traitement, de commande et d'asservissement 49 dont une sortie est reliée à l'entrée de commande d'un oscillateur contrôlé en fréquence 50 qui fournit les différentes fréquences locales au mélangeur 45. Le circuit 49 présente une sortie de signal reçu 51a et une sortie de signal de commande 51.

Ce dispositif de réception 7 est réglé ou calé de manière à pouvoir détecter les signaux radioélectriques apparaissant sur les fréquences f₁ et f₂. Il est donc capable de fournir à sa sortie 51a l'inverse du signal binaire B₁ et le signal binaire B₂ émis respectivement par les dispositifs d'émission 3 et 4 sur la fréquence f₁ ainsi que l'inverse du signal binaire B₂ émis par le dispositif d'émission 4 sur la fréquence f₂. Il est en outre adapté pour fournir un signal de commande sur sa sortie 51 lorsque les deux canaux de transmission associés aux fréquences f₁ et f₂ sont excités simultanément pendant une durée déterminée, cette fonction étant réalisée par le circuit de traitement 49.

Le système de transmission 1 décrit ci-dessus présente de nombreux avantages. En effet, sa structure permet notamment d'assurer de façon simple une transmission très fiable des signaux et de déceler l'impossibilité de recevoir les signaux que l'on veut transmettre.

En effet, le signal binaire B₁ ou son inverse transitent par voie radioélectrique du dispositif d'émission 3 au dispositif de réception 6 par deux canaux indépendants de transmission associés aux fréquences fₒ et f₁, et cela simultanément, de telle sorte que si l'un des canaux de transmission est perturbé, le signal binaire B₁ ou son inverse sont néanmoins transmis par l'autre canal de transmission. Ce même objectif est également atteint par le couple formé par le dispositif d'émission 4 et le dispositif de réception 7 car le signal binaire B₂ ou son inverse peuvent transiter indépendamment par les canaux de transmission associés aux fréquences f₁ et f₂.

De plus, si les deux canaux de transmission associés aux fréquences fₒ et f₁ sont excités simultanément pendant une durée au moins égale au temps de temporisation du circuit de temporisation 42, cela signifie que ces deux canaux sont en même temps perturbés ou indisponibles et que la transmission du signal binaire B₁ entre le dispositif d'émission 3 et le dispositif de réception 6 est impossible, ce fait étant signalé par l'apparition d'un signal de commande à la sortie 43 de ce dispositif de réception 6. Le couple formé par le dispositif d'émission 4 et le dispositif de réception 7 assure également cet objectif.

Le signal binaire Bₒ émis par le dispositif d'émission 2 peut être reçu par les dispositifs de réception 5 et 6, le signal binaire B₁ ou son inverse émis par le dispositif d'émission 3 peuvent être reçus par les dispositifs de réception 5, 6 et 7 et le signal binaire B₂ ou son inverse émis par le dispositif d'émission 4 peuvent être reçus par les dispositifs de réception 6 et 7, ces liaisons par voie radioélectrique ne mettant en oeuvre que trois canaux de transmission associés aux fréquences fₒ, f₁ et f₂.

Les objectifs et avantages du système de transmission 1 décrits ci-dessus sont particulièrement intéressants dans l'application suivante, dans laquelle une multiplicité d'émetteurs indépendants peuvent émettre de façon aléatoire et/ou simultanée.

Le système de transmission 1 peut en effet constituer un système de liaison par voie radioélectrique à plusieurs réseaux, par exemple un réseau de surveillance et de commande d'appareils ménagers et un réseau de sécurité des biens et des personnes, ce système de sécurité étant d'une manière générale un système d'alarme. Dans ce cas, les signaux binaires B₁ et B₂ pourraient être générés par des détecteurs liés à la sécurité des biens et des personnes et le signal Bₒ pourrait être généré par des émetteurs liés à la surveillance et à la commande des appareils ménagers.

Comme il résulte de ce qui précède, un signal de sécurité, par exemple le signal B₁ ou le signal B₂, serait transmis simultanément et de façon fiable et redondante sur deux canaux de transmission, un canal pouvant être perturbé ou bloqué sans conséquence sur la transmission dudit signal de sécurité. Si les deux canaux de transmission liés à ce signal de sécurité sont par exemple brouillés en même temps, il s'agirait alors avec une forte probabilité d'un brouillage volontaire et le signal de commande généré constituerait alors un signal de commande d'alarme. La détection de brouillage n'est pas nécessaire lorsqu'il s'agit de transmettre le signal Bₒ dont on peut considérer que la fonction est moins importante que la fonction des signaux B₁ et B₂ liés à la sécurité.

La présente invention ne se limite pas à ce qui vient d'être décrit. En particulier, le système de transmission 1 pourrait comprendre d'autres dispositifs d'émission et d'autres dispositifs de réception. Les signaux Bₒ, B₁ et B₂ pourraient être des signaux à plus de deux états ou des messages ou d'une répétition des messages composés chacun d'une succession de signaux, chacun de ces états ou messages pouvant transiter simultanément ou successivement par plus de deux canaux de transmission tel que pourrait le faire l'oscillateur 22 à sauts de fréquences en association avec des récepteurs synchronisés, chaque canal permettant de reconstituer l'intégralité du message ou de l'information émis. Chaque signal binaire pourrait par exemple être multiplexé entre plus de deux canaux de transmission, chaque canal permettant indépendamment de reconstituer l'intégralité du message ou de l'information émis.

## Revendications

1. Procédé de transmission d'une information, tel qu'un signal à au moins deux états, fournie à l'entrée de moyens d'émission et exploitable à la sortie de moyens de réception, caractérisé par le fait qu'il consiste :
à transformer le signal (B1) contenant l'information précitée au moins en un premier signal intermédiaire (17) et un second signal intermédiaire (20) dont les états de chacun caractérisent l'information à transmettre,
à créer des canaux de transmission indépendants caractérisés par des fréquences porteuses différentes (fo, f1) pour chacun de ces canaux,
à émettre séparément et indépendamment l'un par rapport à l'autre lesdits premier et second signaux intermédiaires respectivement sur lesdits canaux de transmission (fo, f1) en modulant leur fréquence porteuse,
à recevoir séparément et indépendamment l'une par rapport à l'autre la fréquence porteuse desdits canaux de transmission et à détecter sa modulation afin d'obtenir le signal intermédiaire transmis par ce canal,
de manière à pouvoir fournir ou reconstituer le signal précité (B1) contenant l'information à partir de la réception d'un seul desdits premier et second signaux intermédiaires (40, 39) via le canal de transmission correspondant, indépendamment de l'absence ou de la modulation de la fréquence porteuse de l'autre canal ou si cet autre canal contient du bruit ou des interférences.

2. Procédé de transmission selon la revendication 1, caractérisé par le fait qu'il consiste :
à transformer le signal (Bo) contenant une autre information en un autre signal intermédiaire (12) dont l'état caractérise l'information à transmettre,
à émettre cet autre signal intermédiaire sur l'un desdits canaux de transmission (fo) en modulant sa fréquence porteuse,
de manière à pouvoir fournir ou reconstituer le signal précité (Bo) contenant l'information à partir de la réception dudit autre signal intermédiaire (30) via le canal de transmission précité correspondant (fo), indépendamment de l'absence ou de la modulation de la fréquence porteuse de l'autre canal (f1) ou si cette autre canal contient du bruit ou des interférences.

3. Procédé de transmission de deux informations, tel que des signaux à au moins deux états, fournies à l'entrée de moyens d'émission et exploitable à la sortie de moyens de réception, caractérisé par le fait qu'il consiste :
à transformer les deux signaux (B1, B2) contenant les informations précitées en respectivement un premier signal intermédiaire et un second signal intermédiaire dont respectivement les états de chacun caractérisent l'information à transmettre,
à créer des canaux de transmission indépendants caractérisés par des fréquences porteuses différentes (f0, f1, f2) pour chacun de ces canaux,
à émettre l'un des signaux intermédiaires correspondant au signal contenant l'une des informations et l'un des signaux intermédiaires correspondant au signal contenant l'autre information sur un canal de transmission commun (f1) et à émettre leur autre signal intermédiaire correspondant sur deux autres canaux de transmission différents (fo, f2), en modulant leur fréquence porteuse,
à recevoir séparément et indépendamment les unes par rapport aux autres la fréquence porteuse desdits canaux de transmission (fo, f1, f2) et à détecter sa modulation afin d'obtenir le signal intermédiaire transmis par ce canal,
de manière à pouvoir fournir ou reconstituer respectivement les signaux précités (B1, B2) contenant les informations à transmettre à partir de la réception d'un seul de leurs premier et second signaux intermédiaires correspondant via le canal de transmission correspondant, indépendamment de l'absence ou de la modulation de la fréquence porteuse de l'autre canal ou si cet autre canal contient du bruit ou des interférences.

4. Procédé selon l'une quelconque des revendications précédentes, le signal précité contenant l'information à transmettre étant un signal binaire, caractérisé par le fait qu'il consiste à transformer ce signal binaire contenant l'information à transmettre en un premier signal intermédiaire correspondant à l'un des états de ce signal binaire et en un second signal intermédiaire correspondant à l'autre état de ce signal binaire, inverse du premier état.

5. Procédé selon l'une quelconque des revendications précédentes, caractérisé par le fait qu'il consiste à produire un signal de commande lorsque les canaux de transmission précités, par lesquels sont transmis les signaux intermédiaires correspondant à l'information à transmettre, sont, pendant une durée déterminée, simultanément activés ou excités par un ou des signaux les perturbant, différents du signal intermédiaire correspondant à transmettre.

6. Procédé selon l'une quelconque des revendications précédentes, caractérisé par le fait qu'il consiste à émettre plusieurs fois les signaux intermédiaires sur chacun de leurs canaux de transmission respectifs, ou à répéter plusieurs fois le signal contenant l'information à transmettre.

7. Système de transmission d'un signal à au moins deux états dont chaque état caractérise l'information à transmettre, tel qu'un signal binaire, caractérisé par le fait qu'il comprend :
- un dispositif d'émission (3) de signaux (B1) comprenant deux oscillateurs (13, 18) commutés en amplitude alternativement par les deux états du signal binaire (B1) et capables d'émettre l'un sur une première fréquence porteuse (fo) correspondant à un premier canal de transmission et l'autre sur une seconde fréquence porteuse (f1) correspondant à un second canal de transmission ou un oscillateur (22) commuté en fréquence porteuse par le signal binaire et capable d'émettre sur une première fréquence porteuse (f1), correspondant à un premier canal de transmission, uniquement lorsque le signal binaire est dans l'un de ses états et sur une deuxième fréquence porteuse (f2), correspondant à un second canal de transmission, uniquement lorsque le signal binaire est dans son autre état,
- et un dispositif de réception (6) à deux canaux de réception indépendants comprenant deux détecteurs de signaux (32, 33) sensibles respectivement et indépendamment auxdites première et deuxième fréquences porteuses (fo, f1), ou un détecteur unique (46) à balayage ou à scrutation de fréquence susceptible de détecter indépendamment et isolément lesdites première et deuxième fréquences porteuses (f1, f2),
de manière à fournir à sa sortie le signal binaire ou son inverse reçus via la première ou la seconde desdites fréquences porteuses (f1, f2), de manière à pouvoir fournir le signal binaire à partir de la réception d'un seul de ses états via l'un dedits canaux de transmission, indépendamment de l'absence, la modulation de la fréquence porteuse de l'autre canal de transmission ou si ces derniers contiennent du bruit ou des interférences.

8. Système de transmission selon la revendication 7, caractérisé par le fait qu'il comprend un second dispositif d'émission (2) de signaux comprenant un oscillateur (8) commuté en amplitude par l'un des états d'un autre signal binaire (Bₒ) et capable d'émettre sur uniquement l'une des fréquences précitées (fₒ), de telle sorte que le dispositif de réception (6) fournisse à sa sortie cet autre signal binaire (Bₒ).

9. Système de transmission selon la revendication 7, caractérisé par le fait qu'il comprend un second dispositif de réception (5) de signaux comprenant un détecteur (27) sensible uniquement à l'une des fréquences précitées (fₒ), de manière à fournir à sa sortie le signal binaire (B₁).

10. Système de transmission selon la revendication 7, caractérisé par le fait qu'il comprend
un second dispositif d'émission (4) de signaux (B₂) comprenant un oscillateur (22) commuté en fréquence par un second signal binaire (B₂) et capable d'émettre sur ladite seconde fréquence (f₂) uniquement lorsque ce second signal binaire (B₂) est dans l'un de ses états et sur une troisième fréquence (f₂) uniquement lorsque ce second signal binaire (B₂) est dans son autre état, ou deux oscillateurs (13, 18) commutés en amplitude alternativement par les deux états de ce second signal binaire et capables d'émettre l'un sur ladite seconde fréquence (f₁) et l'autre sur une troisième fréquence (f₂),
et un second dispositif de réception (7) comprenant soit un détecteur unique (46) à balayage ou à scrutation de fréquences susceptible de détecter indépendamment lesdites seconde et troisième fréquences (f₁, f₂) soit deux détecteurs de signaux (32, 33) sensibles respectivement et indépendamment auxdites seconde et troisième fréquences (f₁, f₂), de manière à fournir sur les sorties des dispositifs de réception (3, 4) lesdits signaux binaires (B₁, B₂) ou leur inverse.

11. Système de transmission selon l'une quelconque des revendications 7 à 10, caractérisé par le fait que le dispositif de réception (6, 7) comprend des moyens (41, 42, 49) pour fournir un signal de commande lorsque les deux fréquences auxquelles il est sensible sont, pendant une durée déterminée, simultanément excitées ou activées par un ou des signaux les perturbant.

12. Système de transmission d'au moins deux signaux binaires contenant des informations à transmettre (B1, B2), fournies à l'entrée de moyens d'émission et exploitables à la sortie de moyens de réception, caractérisé par le fait qu'il comprend:
- des moyens (19, 21) pour transformer les signaux binaires précités en respectivement un premier signal intermédiaire (17) et un second signal intermédiaire (20) dont les états de chacun caractérisent l'information à transmettre correspondante,
- des dispositifs d'émission (3, 4) de signaux comprenant des moyens pour émettre l'un des signaux intermédiaires correspondant au signal contenant l'une des informations et l'un des signaux intermédiaires correspondant au signal contenant l'autre information sur un canal de transmission commun (f1) et pour émettre leur autre signal intermédiaire correspondant sur deux autres canaux de transmission différents (f0, f2), en modulant leur fréquence porteuse,
- et des dispositifs de réception comprenant des détecteurs adaptés pour recevoir séparément et indépendamment les unes par rapport aux autres respectivement les fréquences porteuses desdits canaux de transmission (f0, f1, f2) ou un détecteur unique (46) à balayage ou à scrutation de fréquence susceptible de détecter indépendamment et isolément lesdites fréquences porteuses (f0, f1, f2), fournissant à leur sortie respectivement les signaux intermédiaires précités, et des moyens pour détecter sa modulation afin d'obtenir le signal intermédiaire transmis par ce canal.

13. Système de transmission de plusieurs signaux binaires entre plusieurs dispositifs d'émission et plusieurs dispositifs de réception, caractérisé
par le fait qu'au moins un premier dispositif d'émission (2) comprend un oscillateur (8) commuté en amplitude par l'un des états d'un premier signal binaire (Bₒ) et capable d'émettre sur une première fréquence (fₒ)
et qu'au moins un second dispositif d'émission (3) comprend un oscillateur (22) commuté en fréquence par un second signal (B1) et capable d'émettre sur ladite première fréquence (fₒ) uniquement lorsque ce second signal binaire est dans l'un de ses états et sur une deuxième fréquence (f₁) uniquement lorsque ce second signal binaire est dans son autre état, ou deux oscillateurs (13, 18) commutés en amplitude alternativement par les deux états du second signal binaire (B1) et capables d'émettre l'un sur ladite première fréquence (fₒ) et l'autre sur une seconde fréquence (f₁) ;
et par le fait qu'au moins un premier dispositif de réception (5) comprend un détecteur (27) sensible uniquement à la première fréquence précitée (fₒ) de manière à fournir à sa sortie le premier signal binaire (Bₒ) ou le second signal binaire (B₁)
et qu'au moins un second dispositif de réception (6) comprend deux détecteurs de signaux (32, 33) sensibles respectivement et indépendamment aux première et seconde fréquences précitées (fₒ, f₁), ou un détecteur unique (46) à balayage de fréquence susceptible de détecter indépendamment lesdites première et seconde fréquences (fₒ, f₁), de manière à fournir sur sa sortie les signaux binaires précités (Bₒ, B₁) ou leur inverse.

14. Système de transmission selon la revendication 13, caractérisé par le fait que le second dispositif de réception (6) comprend des moyens (41, 42) capables de fournir un signal de commande lorsque les deux fréquences (fₒ, f₁) sont, pendant une durée déterminée, simultanément excitées ou activées par un ou des signaux les perturbant.

15. Système de transmission selon l'une quelconque des revendications 7 à 14, caractérisé par le fait que les dispositifs d'émission (2, 3, 4) et les dispositifs de réception (5, 6, 7) sont reliés par voie radioélectrique.

16. Système de transmission d'une information, tel qu'un signal à au moins deux états, fournie à l'entrée de moyens d'émission et exploitable à la sortie de moyens de réception, caractérisé par le fait qu'il comprend :
- des moyens (16, 19) pour transformer le signal contenant l'information à transmettre (B1) en un premier signal intermédiaire (17) et un second signal intermédiaire (20) dont les états de chacun caractérisent l'information à transmettre,
- un dispositif d'émission (3) de signaux (B1) sur au moins deux canaux de transmission indépendants (fo, f1) comprenant deux oscillateurs (13, 18) capables d'émettre l'un sur une première fréquence porteuse d'un premier canal de transmission (fo) et l'autre sur une deuxième fréquence porteuse d'un deuxième canal de transmission (f1) ou un oscillateur (22) capable d'émettre sur une première fréquence porteuse et sur une deuxième fréquence porteuse, en vue d'émettre lesdits signaux intermédiaires repectivement sur lesdits canaux de transmission caractérisés par les fréquences porteuses différentes précitées,
- et un dispositif de réception (6) à au moins deux canaux de réception indépendants (fo, f1), comprenant deux détecteurs de signaux (32, 33) indépendants sensibles respectivement auxdites première et deuxième fréquences porteuses (fo, f1) ou un détecteur unique (46) à balayage ou à scrutation de fréquence susceptible de détecter indépendamment et isolément lesdites première et deuxième fréquences porteuses (f1, f2), fournissant à leur sortie respectivement les signaux intermédiaires précités,
de manière à pouvoir fournir ou reconstituer le signal précité (B1) contenant l'information à transmettre à partir de la réception d'un seul desdits premier et second signaux intermédiaires via le canal de transmission correspondant, indépendamment de l'absence ou de la modulation de la fréquence porteuse de l'autre canal ou si cette autre canal contient du bruit ou des interférences.

17. Système de transmission selon la revendication 16, le signal précité contenant l'information à transmettre étant un signal binaire, caractérisé par le fait qu'il comprend :
- des moyens pour transformer ce signal binaire contenant l'information à transmettre en un premier signal intermédiaire identique à ce signal binaire et en un deuxième signal intermédiaire correspondant à l'inverse de ce signal binaire.

18. Système de transmission selon l'une des revendications 16 et 17, caractérisé par le fait que le dispositif de réception comprend des moyens (41, 42, 49) pour fournir un signal de commande lorsque les fréquences distinctes auxquelles il est sensible sont, pendant une durée déterminée, simultanément excités ou activés par des signaux les perturbant.

## Patentansprüche

1. Übertragungsverfahren für eine Information, z.B. ein Signal mit wenigstens zwei Zuständen, das in den Eingang einer Sendeeinrichtung eingespeist wird und an dem Ausgang einer Empfangseinrichtung ansteht, dadurch gekennzeichnet, daß es darin besteht:
daß das die Information enthaltende Signal (B1) wenigstens in ein erstes Zwischensignal (17) und in ein zweites Zwischensignal (20) umgeformt wird, deren jeweilige Zustände die zu übertragende Information repräsentieren,
daß unabhängige Übertragungskanäle geschaffen werden, die durch Trägerfrequenzen (f0, f1) charakterisiert sind, die je Kanal unterschiedlich sind,
daß das erste und das zweite Zwischensignal jeweils auf den Übertragungskanälen (f0, f1) getrennt und unabhängig voneinander gesendet werden, indem deren Trägerfrequenz moduliert wird,
daß die jeweiligen Trägerfrequenzen der Übertragungskanäle gesondert und unabhängig voneinander empfangen und ihre Modulation festgestellt wird, um so das über diesen Kanal übertragene Zwischensignal zu erhalten,
indem, ausgehend von dem Empfang entweder des ersten oder zweiten Zwischensignals (40, 39) über den entsprechenden Übertragungskanal, das die Information enthaltende Signal (B1) abgegeben oder wiederhergestellt werden kann, und zwar unabhängig davon, ob die Trägerfrequenz des anderen Kanals oder deren Modulation fehlt, und unabhängig davon, ob dieser andere Kanal Rauschen oder Interferenzen enthält.

2. Übertragungsverfahren nach Anspruch 1, dadurch gekennzeichnet, daß es darin besteht:
daß das eine andere Information enthaltende Signal (B0) in ein anderes Zwischensignal (12) umgeformt wird, dessen Zustand die zu übertragende Information repräsentiert,
daß dieses andere Zwischensignal über den einen der Übertragungskanäle (f0) gesendet wird, indem seine Trägerfrequenz derart moduliert wird,
daß, ausgehend von dem Empfang des besagten anderen Zwischensignals (12) über den entsprechenden Übertragungssignal (f0), das die Information enthaltende Signal (B0) abgegeben oder wiederhergestellt werden kann, und zwar unabhängig davon, ob die Trägerfrequenz des anderen Kanals oder deren Modulation fehlt, und unabhängig davon, ob dieser andere Kanal Rauschen oder Interferenzen enthält.

3. Übertragungsverfahren für zwei Informationen, z.B. Signale mit wenigstens zwei Zuständen, die in den Eingang einer Sendeeinrichtung eingespeist werden und an dem Ausgang einer Empfangseinrichtung anstehen, dadurch gekennzeichnet, daß es aus folgenden Schritten besteht:
daß die beiden die Informationen enthaltenden Signale (B1, B2) in ein erstes bzw. ein zweites Zwischensignal umgeformt werden, deren entsprechende Zustände jeweils die zu übertragende Information repräsentieren,
daß unabhängige Ubertragungskanäle geschaffen werden, die durch Trägerfrequenzen (f0, f1, f2) charakterisiert sind, die je Kanal unterschiedlich sind,
daß eines der Zwischensignale, das dem die eine der Informationen enthaltenden Signal entspricht, und eines der Zwischensignale, das dem die andere Information enthaltenden Signal entspricht, auf einem gemeinsamen Übertragungskanal (f1) gesendet werden und daß deren anderes Zwischensignal auf zwei anderen unterschiedlichen Übertragungskanälen (f0, f2) gesendet wird, indem ihre jeweilige Trägerfrequenz moduliert wird,
daß die jeweilige Trägerfrequenz der Übertragungskanäle (f0, f1, f2) getrennt und unabhängig voneinander empfangen und ihre Modulation festgestellt wird, um das über diesen Kanal übertragene Zwischensignal zu erhalten,
derart, daß, ausgehend von dem Empfang von nur einem, entweder dem ersten oder dem zweiten Zwischensignal über den entsprechenden Übertragungskanal, die die Informationen enthaltenden Signale (B1,B2) abgegeben oder wiederhergestellt werden können, und zwar unabhängig davon, ob die Trägerfrequenz des anderen Kanals oder deren Modulation fehlt, und unabhängig davon, ob dieser andere Kanal Rauschen oder Interferenzen enthält.

4. Verfahren nach einem der vorstehenden Ansprüche, bei dem das die zu übertragende Information enthaltende Signal ein binäres Signal ist, dadurch gekennzeichnet, daß das Verfahren darin besteht, daß das die zu übertragende Information enthaltende binäre Signal in ein erstes Zwischensignal, das dem einen der Zustände des binären Signales entspricht, und in ein zweites Zwischensignal umgeformt wird, das dem anderen Zustand des binären Signales entspricht, der zu dem ersten Zustand invers ist.

5. Verfahren nach einem der vorstehenden Ansprüche, dadurch gekennzeichnet, daß es darin besteht, ein Steuersignal zu erzeugen, wenn die Übertragungskanäle, über welche die Zwischensignale übertragen werden, die der zu übertragenden Information entsprechen, für eine bestimmte Zeit durch ein sie störendes Signal oder mehrere sie störende Signale aktiviert oder angeregt sind, das oder die sich von dem zu übertragenden Zwischensignal unterscheiden.

6. Verfahren nach einem der vorstehenden Ansprüche, dadurch gekennzeichnet, daß es darin besteht, daß die Zwischensignale auf jedem ihrer zugehörigen Übertragungskanäle mehrere Male gesendet werden oder daß das die zu übertragende Information enthaltende Signal mehrere Male wiederholt wird.

7. System zur Übertragung eines Signales mit wenigstens zwei Zuständen, bei dem jeder Zustand die zu übertragende Information repräsentiert, beispielsweise ein binäres Signal, dadurch gekennzeichnet, daß das System aufweist:
eine Sendeeinrichtung (3) für Signale (B1), die zwei Oszillatoren (13, 18) umfaßt, deren Amplitude von den beiden Zuständen des binären Signales (B1) abwechselnd umgeschaltet wird und die dazu geeignet sind, den einen Zustand mit einer ersten einem ersten Übertragungskanal entsprechenden Trägerfrequenz (f0) und den anderen Zustand mit einer zweiten einem zweiten Übertragungskanal entsprechenden Trägerfrequenz (f1) zu senden, oder einen Oszillator (22) aufweist, dessen Trägerfrequenz durch das binäres Signal umgeschaltet wird und der dazu geeignet ist, nur dann eine erste einem ersten Ubertragungskanal entsprechende Trägerfrequenz (f₁) zu senden, wenn das binäre Signal in dem einen seiner Zustände ist, und eine zweite einem zweiten Übertragungskanal entsprechende Trägerfrequenz (f2) zu senden, wenn das binäre Signal in seinem anderen Zustand ist,
eine Empfangseinrichtung (6) mit zwei unabhängigen Empfangskanälen, die zwei voneinander unabhängig auf die erste bzw. auf die zweite Trägerfrequenz (f0, f1) ansprechende Signaldemodulatoren (32, 33) aufweist oder einen einzigen Demodulator (46) mit Frequenzabtastung oder Frequenzsuchlauf umfaßt, der dazu geeignet ist, die erste und die zweite Trägerfrequenz (f1, f2) getrennt und unabhängig voneinander zu demodulieren, derart, daß an seinem Ausgang das über die erste oder die zweite Trägerfrequenz (f1, f2) empfangene binäre Signal oder sein invertiertes Signal abgegeben wird,
derart, daß, ausgehend von dem Empfang eines einzigen der Zustände des binären Signals über einen der Übertragungskanäle, das binäre Signal abgegeben werden kann, und zwar unabhängig davon, ob die Trägerfrequenz des anderen Kanals oder deren Modulation fehlt, und unabhängig davon, ob dieser andere Kanal Rauschen oder Interferenzen enthält.

8. Übertragungssystem nach Anspruch 7, dadurch gekennzeichnet, daß es eine zweite Sendeeinrichtung (2) für Signale umfaßt, die einen Oszillator (8) aufweist, dessen Amplitude von dem einen der Zustände eines anderen binären Signales (B0) umgeschaltet wird und der dazu geeignet ist, auf einer einzigen der oben genannten Frequenzen (f0) zu senden, derart, daß an dem Ausgang der Empfangseinrichtung (6) dieses andere binäre Signal (B0) ansteht.

9. Übertragungssystem nach Anspruch 7, dadurch gekennzeichnet, daß es eine zweite Empfangseinrichtung (5) für Signale umfaßt, die einen Demodulator (27) aufweist, der nur auf die eine der oben genannten Frequenzen (f0) anspricht, derart, daß an dem Ausgang der Empfangseinrichtung (5) das binäre Signal (B1) ansteht.

10. Übertragungssystem nach Anspruch 7, dadurch gekennzeichnet, daß es aufweist:
eine zweite Sendeeinrichtung (4) für Signale (B2), die einen durch ein zweites binäres Signal (B2) in der Frequenz umschaltbaren Oszillator (22) enthält, der dazu geeignet ist, nur dann die zweite Frequenz (f1) abzugeben, wenn sich das zweite binäre Signal (B2) in dem einen seiner Zustände befindet, und eine dritte Frequenz (f2) nur dann abzugeben, wenn sich das zweite Signal (B2) in seinem anderen Zustand befindet, oder die zwei Oszillatoren (13, 18) enthält, deren Amplitude von den beiden Zuständen dieses zweiten binären Signales abwechselnd umgeschaltet wird, und die dazu geeignet sind, den einen Zustand mit der zweiten Frequenz (f1) und den anderen Zustand mit einer dritten Frequenz (f2) auszusenden,
eine zweite Empfangseinrichtung (7), die entweder einen einzigen Demodulator (46) mit Frequenzabtastung oder mit Frequenzsuchlauf, der dazu geeignet ist, die zweite bzw. dritte Frequenz (f1, f2) unabhängig voneinander zu demodulieren, oder zwei Signaldemodulatoren (32, 33) enthält, die jeweils unabhängig voneinander auf die zweite und dritte Frequenz (f1, f2) ansprechen, derart, daß an den Ausgängen der Empfangseinrichtungen (3, 4) die binären Signale (B1, B2) oder ihre invertierten Signale anstehen.

11. Übertragungssystem nach einem der vorstehenden Ansprüche 7 bis 10, dadurch gekennzeichnet, daß die Empfangseinrichtung (6, 7) Mittel (41, 42, 49) aufweist, um ein Steuersignal abzugeben, wenn die beiden Frequenzen, auf die sie ansprechen, während einer bestimmten Zeitdauer durch ein sie störendes Signal oder mehrere sie störende Signale gleichzeitig angeregt oder aktiviert sind.

12. Übertragungssystem für wenigstens zwei binäre Signale (B1, B2), die die zu übertragenden Informationen enthalten, die an den Eingang der Sendeeinrichtung eingespeist werden und an dem Ausgang der Empfangseinrichtung anstehen, dadurch gekennzeichnet, daß es aufweist:
Mittel (19, 21), um die oben genannten binären Signale in ein erstes bzw. ein zweites Zwischensignal (17, 20) umzuformen, deren Zustände jeweils die zugeordnete, zu übertragende Information repräsentieren,
Sendeeinrichtungen (3, 4) für Signale, die Mittel umfassen, um eines der Zwischensignale, das dem die eine der Informationen enthaltenden Signal entspricht, und um das eine der Zwischensignale, das dem die andere Information enthaltenden Signal entspricht, über einen gemeinsamen Ubertragungskanal (f1) zu senden und um das andere den Informationen entsprechende Zwischensignal über zwei andere unterschiedliche Übertragungskanäle (f0, f2) zu senden, indem ihre Trägerfrequenzen moduliert werden;
Empfangseinrichtungen, die Demodulatoren, die dafür eingerichtet sind, um die einen Trägerfrequenzen der Ubertragungskanäle (f0, f1, f2) von den anderen Trägerfrequenzen jeweils getrennt und unabhängig zu empfangen, oder einen einzelnen Demodulator (46) mit Frequenzabtastung oder Frequenzsuchlauf aufweisen, der dazu geeignet ist, die Trägerfrequenzen (f0, f1, f2) getrennt und unabhängig voneinander zu demodulieren, wobei die Empfangseinrichtungen an ihrem Ausgang die jeweiligen Zwischensignale abgeben und Mittel bereitstellen, um ihre Modulation festzustellen, um das über diesen Kanal übertragene Zwischensignal zu erhalten.

13. System zum Übertragen mehrerer binärer Signale zwischen mehreren Sendeeinrichtungen und mehreren Empfangseinrichtungen, dadurch gekennzeichnet, daß
wenigstens eine erste Sendeeinrichtung (2) einen Oszillator (8) aufweist, dessen Amplitude von dem Zustand des ersten binären Signales (B0) umgeschaltet wird und der dafür geeignet ist, eine erste Frequenz (f0) abzugeben,
und daß wenigstens eine zweite Sendeeinrichtung (3) entweder einen Oszillator (22) enthält, dessen Frequenz durch ein zweites binäres Signal (B1) umgeschaltet wird und der dazu geeignet ist, nur dann die erste Frequenz (f0) abzugeben, wenn sich dieses zweite binäre Signal in dem einen seiner Zustände befindet, und nur dann eine zweite Frequenz (f1) abzugeben, wenn sich dieses zweite binäre Signal in seinem anderen Zustand befindet, oder zwei Oszillatoren (13, 18) enthält, deren Amplituden von den beiden Zuständen des zweiten binären Signales (B1) abwechselnd umgeschaltet werden, wobei die Oszillatoren dafür geeignet sind, den einen Zustand auf der ersten Frequenz (f0) und den anderen Zustand auf der zweiten Frequenz (f1) abzugeben, und daß
wenigstens eine zweite Empfangseinrichtung (5) einen ausschließlich auf die erste Frequenz (f0) ansprechenden Demodulator (27) enthält, derart, daß an seinem Ausgang das erste binäre Signal (B0) oder das zweite binäre Signal (B1) anstehen und daß
wenigstens eine zweite Empfangseinrichtung (6) zwei Signaldemodulatoren (32, 33), die unabhängig voneinander jeweils auf die erste und die zweite Frequenz (f0, f1) ansprechen, oder einen einzigen Demodulator (46) mit Frequenzabtastung und Frequenzsuchlauf aufweist, der dazu geeignet ist, die erste und die zweite Frequenz (f0, f1) unabhängig voneinander zu demodulieren, derart, daß an seinem Ausgang die binären Signale (B0, B1) oder ihre invertierten Signale anstehen.

14. Übertragungssystem nach Anspruch 13, dadurch gekennzeichnet, daß die zweite Empfangseinrichtung (6) Mittel (41, 42) umfaßt, die dazu geeignet sind, ein Steuersignal abzugeben, wenn die beiden Frequenzen (f0, f1) für eine bestimmte Zeitdauer durch ein sie störendes Signal oder mehrere sie störende Signale gleichzeitig angeregt oder aktiviert sind.

15. Übertragungsvorrichtung nach einem der Ansprüche 7 bis 14, dadurch gekennzeichnet, daß die Sendeeinrichtungen (2, 3, 4) und die Empfangseinrichtungen (5, 6, 7) drahtlos miteinander verbunden sind.

16. Übertragungssystem für eine Information, z. B. ein Signal mit wenigstens zwei Zuständen, das in den Eingang der Sendeeinrichtung eingespeist wird und das an dem Ausgang der Empfangseinrichtung ansteht, dadurch gekennzeichnet, daß es aufweist:
Mittel (16, 19), um das die zu übertragende Information enthaltende Signal (B1) in ein erstes Zwischensignal (17) und ein zweites Zwischensignal (20) umzuformen, deren Zustände jeweils die zu übertragende Information repräsentieren;
eine Sendeeinrichtung (3) für Signale (B1) mit wenigstens zwei voneinander unabhängigen Übertragungskanälen (f0, f1), die zwei Oszillatoren (13, 18), die dafür geeignet sind, den einen Zustand des binären Signales (B1) auf einer ersten Trägerfrequenz des ersten Übertragungskanales (f0) und den anderen Zustand auf einer zweiten Trägerfrequenz auf des zweiten Übertragungskanales (f1) zu senden, oder einen Oszillator (22) aufweist, der dazu geeignet ist, auf einer ersten Trägerfrequenz und auf einer zweiten Trägerfrequenz zu senden, um die Zwischensignale jeweils auf den Übertragungskanälen zu senden, die durch unterschiedliche Trägerfrequenzen charakterisiert sind,
eine Empfangseinrichtung (6) mit wenigstens zwei voneinander unabhängigen Empfangskanälen (f0, f1), die zwei Signaldemodulatoren (32, 33), die unabhängig voneinander auf die erste bzw. die zweite Trägerfrequenz (f0, f1) ansprechen, oder einen einzigen Demodulator (46) mit Frequenzabtastung oder Frequenzsuchlauf aufweist, der dazu geeignet ist, die erste und die zweite Trägerfrequenz (f1, f2), unabhängig und getrennt voneinander zu demodulieren, wobei an den Ausgängen der Demodulatoren die jeweiligen Zwischensignale anstehen,
derart, daß ausgehend von dem Empfang über den entsprechenden Übertragungskanal von lediglich einem, entweder dem ersten oder dem zweiten Zwischensignal, das die zu übertragende Information enthaltende Signal (B1), abgegeben oder aufgebaut werden kann, und zwar unabhängig davon, ob die Trägerfrequenz des anderen Kanals oder deren Modulation fehlt, und unabhängig davon, ob dieser andere Kanal Rauschen oder Interferenzen enthält.

17. Übertragungssystem nach Anspruch 16, bei dem das die zu übertragende Information enthaltende Signal ein binäres Signal ist, dadurch gekennzeichnet, daß das Übertragungssystem Mittel aufweist, um das die zu übertragende Information enthaltende binäre Signal in ein erstes Zwischensignal, das mit dem binären Signal identisch ist, und in ein zweites Zwischensignal umzuformen, das dem invertierten Signal des binären Signales entspricht.

18. Übertragungssystem nach einem der Ansprüche 16 oder 17, dadurch gekennzeichnet, daß die Empfangseinrichtung Mittel (41, 42, 49) aufweist, um ein Steuersignal abzugeben, wenn die unterschiedlichen Frequenzen, auf die die Empfangseinrichtung anspricht, für eine bestimmte Zeitdauer durch sie störende Signale gleichzeitig angeregt oder aktiviert sind.

## Claims

1. A process for transmitting a piece of information, such as a signal having at least two states, supplied to the input of a transmission means and usable at the output of reception means, characterised in that it consists of:
transforming the signal (B1) containing the above-mentioned information into at least a first intermediate signal (17) and a second intermediate signal (20) the states of each of which characterise the information to be transmitted,
creating independent transmission channels characterised by different carrier frequencies (fo, f1) for each of these channels,
transmitting separately and independently of one another the said first and second intermediate signals on the said transmission channels (fo,f1) respectively by modulating their carrier frequency,
receiving separately and independently of one another the carrier frequency of the said transmission channels and detecting its modulation so as to obtain the intermediate signal transmitted by this channel,
so as to be capable of supplying or of reconstructing the above-mentioned signal (B1) containing the information, given the reception of only one of the said first and second intermediate signals (40,39) via the corresponding transmission channel, irrespective of the absence or of the modulation of the carrier frequency of the other channel or if this other channel contains noise or interference.

2. A transmission process according to claim 1, characterised in that it consists of:
transforming the signal (Bo) containing further information into a further intermediate signal (12) the state of which characterises the information to be transmitted,
transmitting this further intermediate signal on one of said transmission channels (fo) by modulating its carrier frequency,
so as to be capable of supplying or of reconstructing the above-mentioned signal (Bo) containing the information, given the reception of said further intermediate signal (30) via the corresponding above-mentioned transmission channel (fo), irrespective of the absence or of the modulation of the carrier frequency of the other channel (f1) or if this other channel contains noise or interference.

3. A process for transmission of two pieces of information, such as signals having at least two states, supplied to the input of a transmission means and usable at the output of a reception means, characterised in that it consists of:
transforming the two signals (B1, B2) containing the above-mentioned pieces of information into a first intermediate signal and a second intermediate signal respectively the states of each of which respectively characterise the information to be transmitted,
creating independent transmission channels characterised by different carrier frequencies (f0, f1, f2) for each of these channels,
transmitting one of the intermediate signals corresponding to the signal containing one of the pieces of information and one of the intermediate signals corresponding to the signal containing the further information on a common transmission channel (f1) and transmitting their corresponding further intermediate signal on two further different channels (fo, f2), by modulating their carrier frequency,
receiving separately and independently of one another the carrier frequency of said transmission channels (fo, f1, f2) and detecting its modulation in order to obtain the intermediate signal transmitted by this channel,
so as to be capable of supplying or of reconstructing the above-mentioned signals (B1, B2) respectively containing the pieces of information to be transmitted, given the reception of only one of their corresponding first and second intermediate signals via the corresponding transmission channel, irrespective of the absence or of the modulation of the carrier frequency of the other channel or if this other channel contains noise or interference.

4. A process according to any one of the preceding claims, the above-mentioned signal containing the information to be transmitted being a binary signal, characterised in that it consists of transforming this binary signal containing the information to be transmitted into a first intermediate signal corresponding to one of the states of this binary signal and into a second intermediate signal corresponding to the other state of this binary signal, opposite to the first state.

5. A process according to any one of the preceding claims, characterised in that it consists of producing a command signal when the above-mentioned transmission channels, through which are transmitted the intermediate signals corresponding to the information to be transmitted, are, for a specified time, simultaneously activated or excited by one or more signals disturbing them, different from the corresponding intermediate signal to be transmitted.

6. A process according to any one of the preceding claims, characterised in that it consists of transmitting the intermediate signals several times on each of their respective transmission channels, or of repeating several times the signal containing the information to be transmitted.

7. A system for transmitting a signal having at least two states each state of which characterises the information to be transmitted such as a binary signal, characterised in that it comprises:
- a device (3) for transmitting signals (B1) comprising two oscillators (13, 18) switched in amplitude alternately by the two states of the binary signal (B1) and able to transmit, the one on a first carrier frequency (fo) corresponding to a first transmission channel, and the other on a second carrier frequency (f1) corresponding to a second transmission channel, or one oscillator (22) switched in carrier frequency by the binary signal and able to transmit on a first carrier frequency (f1), corresponding to a first transmission channel, solely when the binary signal is in one of its states and on a second carrier frequency (f2), corresponding to a second transmission channel, solely when the binary signal is in its other state,
- and a reception device (6) with two independent reception channels comprising two signal detectors (32, 33) sensitive respectively and independently to said first and second carrier frequencies (fo, f1), or a single detector (46) of frequency scanning or frequency search type capable of detecting independently and in isolation said first and second carrier frequencies (f1, f2), so as to supply at its output the binary signal or its opposite received via the first or the second of the said carrier frequencies (f1, f2),
so as to be capable of supplying the binary signal given the reception of only one of its states via one of said transmission channels, irrespective of the absence, the modulation of the carrier frequency of the other transmission channel or if these channels contain noise or interference.

8. A transmission system according to claim 7, characterised in that it comprises a second signal transmission device (2) comprising an oscillator (8) switched in amplitude by one of the states of a further binary signal (Bₒ) and capable of transmitting on solely one of the above-mentioned frequencies (fₒ), so that the reception device (6) supplies at its output this further binary signal (Bₒ).

9. A transmission system according to claim 7 characterised in that it comprises a second signal reception device (5) comprising a detector (27) sensitive solely to one of the above-mentioned frequencies (fₒ), so as to supply at its output the binary signal (B₁).

10. A transmission system according to claim 7, characterised in that it comprises
a second device (4) for the transmission of signals (B₂) comprising an oscillator (22) switched in frequency by a second binary signal (B₂) and capable of transmitting on said second frequency (f₂) (sic) solely when this second binary signal (B₂) is in one of its states and on a third frequency (f₂) solely when this second binary signal (B₂) is in its other state, or two oscillators (13, 18) switched in amplitude alternately by the two states of this second binary signal and capable of transmitting, one on said second frequency (f₁) and the other on a third frequency (f₂),
and a second reception device (7) comprising either a single detector (46) of frequency scanning or frequency search type capable of detecting independently said second and third frequencies (f₁, f₂), or two signal detectors (32, 33) sensitive respectively and independently to said second and third frequencies (f₁, f₂), so as to supply on the outputs of the reception devices (3, 4) said binary signals (B₁, B₂) or their opposites.

11. A transmission system according to any of claims 7 to 10, characterised in that the reception device (6, 7) comprises means (41, 42, 49) for supplying a command signal when the two frequencies to which it is sensitive are, for a specified time, simultaneously excited or activated by one or more signals disturbing them.

12. A system for transmitting at least two binary signals containing information to be transmitted (B1, B2), supplied at the input of a transmission means and usable at the output of a reception means,
characterised in that it comprises:
- means (19, 21) for transforming the above-mentioned binary signals into a first intermediate signal (17) and a second intermediate signal (20) respectively, the states of each of which characterise the corresponding information to be transmitted,
- signal transmission devices (3, 4) comprising means for transmitting one of the intermediate signals corresponding to the signal containing one of the pieces of information and one of the intermediate signals corresponding to the signal containing the further information on a common transmission channel (f1) and for transmitting their other corresponding intermediate signal on two further different transmission channels (f0, f2), by modulating their carrier frequencies,
- and reception devices comprising detectors adapted to receive separately and independently of one another the carrier frequencies of said transmission channels (f0, f1, f2) respectively or a single detector (46) of frequency scanning or frequency search type capable of detecting independently and in isolation said carrier frequencies (f0, f1, f2), supplying the above-mentioned intermediate signals at their outputs respectively, and means for detecting its modulation in order to obtain the intermediate signal transmitted by this channel.

13. A system for transmission of several binary signals between several transmission devices and several reception devices, characterised
in that at least one first transmission device (2) comprises an oscillator (8) switched in amplitude by one of the states of a first binary signal (B₀) and capable of transmitting on a first frequency (fₒ)
and in that at least one second transmission device (3) comprises an oscillator (22) switched in frequency by a second binary signal (B1) and capable of transmitting on the said first frequency (fₒ) solely when this second binary signal is in one of its states and on a second frequency (f₁) solely when this second binary signal is in its other state, or two oscillators (13, 18) switched in amplitude alternately by the two states of the second binary signal (B1) and capable of transmitting, one on said first frequency (fₒ) and the other on a second frequency (f₁);
and in that at least one first reception device (5) comprises a detector (27) sensitive solely to the first above-mentioned frequency (fₒ) so as to supply at its output the first binary signal (Bₒ) or the second binary signal (B₁)
and in that at least one second reception device (6) comprises two signal detectors (32, 32) sensitive respectively and independently to the above-mentioned first and second frequencies (fₒ, f₁), or a single detector (46) of frequency scanning type capable of detecting independently the said first and second frequencies (fₒ, f₁), so as to supply on its output the above-mentioned binary signals (Bₒ, B₁) or their opposites.

14. The transmission system according to claim 13, characterised in that the second reception device (6) comprises means (41, 42) capable of supplying a command signal when the two frequencies (fₒ, f₁) are, for a specified time, simultaneously excited or activated by one or more signals disturbing them.

15. The transmission system according to any one of claims 7 to 14, characterised in that the transmission devices (2, 3, 4) and the reception devices (5, 6, 7) are linked by a radioelectric method.

16. A system for transmitting a piece of information, such as a signal having at least two states, supplied at the input of a transmission means and usable at the output of a reception means, characterised in that it comprises:
- means (16, 19) for transforming the signal containing the information to be transmitted (B1) into a first intermediate signal (17) and a second intermediate signal (20) the states of each of which characterise the information to be transmitted,
- a device (3) for transmitting signals (B1) on at least two independent transmission channels (fo, f1) comprising two oscillators (13, 18) capable of transmitting, the one on a first carrier frequency of a first transmission channel (fo) and the other on a second carrier frequency of a second transmission channel (f1) or one oscillator (22) capable of transmitting on a first carrier frequency and on a second carrier frequency, with a view to transmitting said intermediate signals respectively on said transmission channels characterised by the above-mentioned different carrier frequencies,
- and a reception device (6) with at least two independent reception channels (fo, f1) comprising two independent signal detectors (32, 33) sensitive to said first and second carrier frequencies (fo, f1) respectively or a single detector (46) of frequency scanning or frequency search type capable of detecting independently and in isolation said first and second carrier frequencies (f1, f2) (sic), supplying at their outputs the above-mentioned intermediate signals respectively,
so as to be capable of supplying or reconstructing the above-mentioned signal (B1) containing the information to be transmitted, given the reception of only one of said first and second intermediate signals via the corresponding transmission channel, irrespective of the absence or of the modulation of the carrier frequency of the other channel or if this other channel contains noise or interference.

17. The transmission system according to claim 16, the above-mentioned signal containing the information to be transmitted being a binary signal, characterised in that it comprises:
- means for transforming this binary signal containing the information to be transmitted into a first intermediate signal identical to this binary signal and into a second intermediate signal corresponding to the opposite of this binary signal.

18. The transmission system according to any of claims 16 and 17, characterised in that the reception device comprises means (41, 42, 49) for supplying a command signal when the separate frequencies to which it is sensitive are, for a specified time, simultaneously excited or activated by signals disturbing them.
